# EUROPEAN PATENT SPECIFICATION

(11) **EP 3 916 213 B1**
(45) Date of publication and mention of the grant of the patent: **17.05.2023**
(21) Application number: 21175492.4
(22) Date of filing: 24.05.2021
(51) Int. Cl.: F02K 9/52

(54) **THE PINTLE, TRACKING INJECTOR**
DÜSENZAPFEN, VERFOLGUNGSINJEKTOR
INJECTEUR DE SUIVI À TÉTON

(30) Priority: 25.05.2020 PL 43406320
(43) Date of publication of application: 01.12.2021
(73) Proprietor: SIEC BADAWCZA LUKASIEWICZ-INSTYTUT LOTNICTWA, 02-256 Warszawa (PL)
(72) Inventor: Ranachowski, Michal, 02-999 Warszawa (PL); Bartkowiak, Bartosz, 03-450 Warszawa (PL); Sekrecki, Michal, 95-082 Przygon (PL)
(74) Representative: AOMB Polska Sp. z.o.o.

(56) References cited:
- US-A- 3 234 731
- US-A- 3 527 056

## Description

The object of the invention is a pintle injector with a tracking action system, applicable to rocket engines powered by a liquid propellant.

### Prior art

The document US3700209 discloses a valve system applicable to rocket engines powered by a liquid propellant, using numerous bellows and dampers. The document describes a complex valve system, in which a pintle in a throttle valve or in an injector valve is dynamically offset by numerous channels formed in the pintle. These channels are distributed in such a manner, so as to successively equalise the pressure growing in the cylinder, until offsetting the forces generated by the fluid flowing across the pintle. When each consecutive channel is exposed to the impact of pressure higher than the pressure in the compensation chamber, the generated force will offset the force generated at the pintle by a fluid flowing through the valve.

The document US8141338 discloses a device for injecting liquid fuel with a high degree of flow rate modulation and a stable rate of injection, which can be closed for the purpose of deactivation and reignition, placed at an upper end of a combustion chamber wall in a rocket engine. The device comprises at least one supply channel for supplying fuel from a tank and a first and second concentric annual accelerating channel, connected to supply channels and having outlets that open through the first and second annular injection section, respectively, situated in the plane which is substantially perpendicular to the chamber axis. The first and second concentric annual channel are oriented so as to be convergent with each other, due to which they lie substantially along the chamber axis, forming an angle which is predefined in such a manner so as to generate two streams of injected liquid fuel. The described valves use viscous damping realised via an hole in a cylinder.

The document US3043104 discloses a valve system with a needle, applicable to aircraft powered by a liquid propellant. The system comprises an inlet fuel line connecting a fuel source to the jet engine of an aircraft, the inlet fuel line having at least one Venturi pump connected in series to an inlet, and outlet ends having a jet nozzle. The described system comprises a dispensing valve and a pressure difference control valve, and a channel connecting said control valve to the dispensing valve. Said control valve directs all excess fuel, whose flow into the engine is blocked by the dispensing valve, to said nozzle of the Venturi pump in order to convert the potential and kinetic energy of unused fuel into fuel energy potential on the inlet side of the pump, exclusively by means of said Venturi pump. The described valves use viscous damping realised via an hole in a cylinder. Document US3234731A discloses an injector according to the prior art.

### Detailed description of disclosure

The object of the invention was to create an injector for a liquid propellant-powered rocket engine with a tracking action with viscous damping, which would provide stepless change of injection parameters, also being characterised by a simple and compact design.

A pintle, tracking injector with an internal damper, comprising a movable closing bushing embedded in a body, which body has at least one outlet hole, at least one inlet hole and an ambient pressure hole, and it also has a pre-tensioned spring, embedded between the closing bushing and the body according to the invention, is characterised in that the closing bushing is sealed by spring bellows, to the inner side of which the ambient pressure is applied through the ambient pressure hole, while on the side opposite to the bellows the closing bushing is provided with a piston with at least one hole through which the fuel flows, wherein said piston moves inside the cylinder and the closing bushing is attached coaxially inside the body, and it is pressed by the spring, which in at least one extreme position closes the outlet hole, and in at least the second extreme position opens the outlet hole.

Preferably, the cylinder is attached coaxially relative to the body on the side opposite to the bellows, on the side of the closing bushing.

Preferably, at least one outlet hole, and more preferably all outlet holes, are placed on the side surface of the body.

Preferably, the outer side surface of the body is the side surface of a cylinder or a solid figure which cross-section has the shape of an ellipse.

Alternatively preferably, the outer side surface of the body is the side surface of a prism.

Preferably, the cross-section of the outer side surface of the body has a different shape from the cross-section of the outer surface of the movable closing bushing.

Preferably, the inlet hole and the ambient pressure hole are placed on the opposite side of the closing bushing from the outlet hole.

The solution is characterised by a simple, compact design. It works automatically in response to changes in fuel flow rate, and the characteristics of the injector can be changed by selecting the spring and the parameters of the damper. The injector has an inner damper which prevents high frequency oscillations. Use of the sealing bellows enabled the elimination of contact seals. This has an advantageous effect on the tightness of the system and its sensitivity.

### Preferred embodiments of the invention

The invention will be closely presented in preferred embodiments, with reference to the attached drawings, in which:

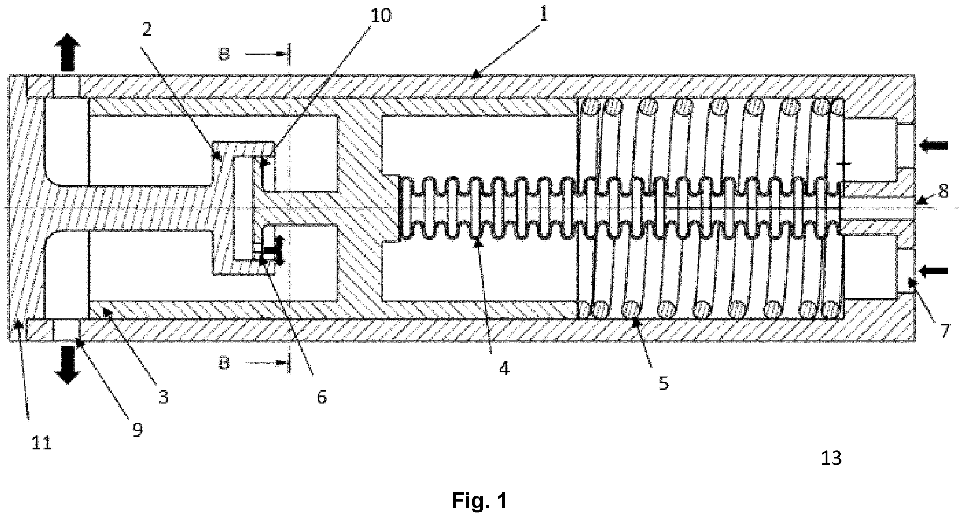

fig. 1 presents an axial section in a vertical plane,
fig. 2 presents a cross-section in the plane B-B, while
fig. 3 presents a simplified layout of a rocket engine with mounted injector.

In a preferred embodiment, the injector 13 comprises an outer body 1 in the form of a stationary bushing, ending with a blinding cap, along with an integrated damper cylinder 2. A movable closing bushing 3 moves inside, covering outlet holes 9 and being pressed by a pressure spring 5 and sealing bellows 4. The fuel is supplied via inlet holes 7, while outside (ambient) pressure is applied to an hole 8. A piston 10 with an hole 6 moves inside the cylinder 2.

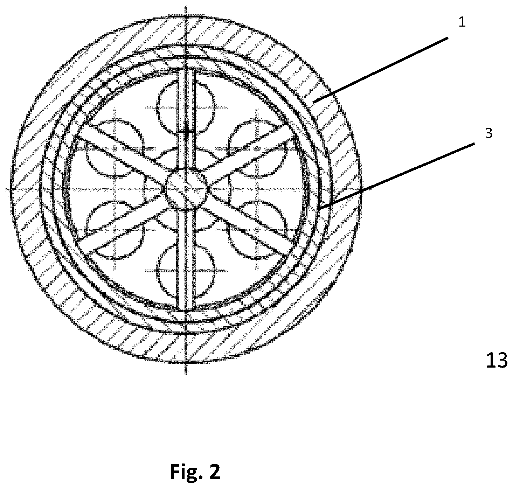

Fig. 2 presents a preferred embodiment, in which the cross-section of the body 1 and the movable closing bushing 3 has an oval, axially symmetrical shape.

In another preferred embodiment, the cross-section of both the body 1 and the movable closing bushing 3 may be polygonal (concave or convex).

In a preferred embodiment, the cross-sectional shape of the body 1 corresponds to the cross-sectional shape of the movable closing bushing 3. In the embodiment presented in the drawings, the cross-section of the outer surface of both the body 1 and the movable closing bushing 3 is a circle.

Alternatively, in a preferred embodiment, the cross-section of the body 1 can have a different shape from the cross-section of the movable closing bushing 3.

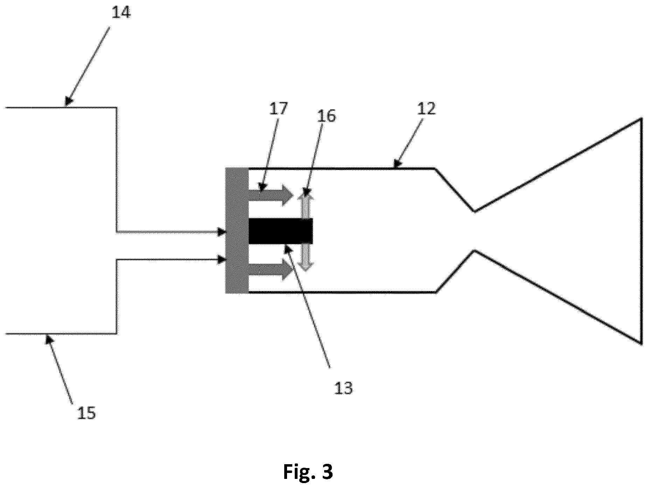

Fig. 3 presents schematically the positioning of the injector 13 in a rocket engine. The injector 13 is placed in the chamber of a rocket engine 12. A fuel supply line 14 and an oxidant supply line 15 are connected to the injector 13. In the rocket engine 12, inside the combustion chamber the injector 13 injects fuel 16, which mixes with the oxidant 17 during the operation of the engine.

### Description of operation

Pressurised fuel flows inside the injector 13 through the inlet holes 7. Due to the pressure difference between the interior of the injector 13 and the ambient pressure which is applied to the hole 8, there is a displacement of the closing bushing 3, which causes the outlet holes 9 to open. Due to the equalisation of forces from the pressure applied to the movable closing bushing 3 and the force in the spring 5, the position of the movable closing bushing 3 becomes fixed relative to the stationary bushing 1. This results in limiting the cross-sectional area of the fuel outlet holes 9. A pressure change in the combustion chamber unbalances the forces applied to the movable closing bushing 3, which results in fixing a new position relative to the stationary bushing 1, and thus a change in the fuel flow rate out of the injector 13. In order to avoid rapid quick-change movements of the bushing, occurring due to pressure changes resulting from uneven combustion, a viscous damper has been used, consisting of the piston 10 connected to the movable closing bushing 3, operating inside the cylinder 2 integrated with the closing cap. Inside the piston 10 there are holes 6 enabling the flow of fuel between the interior of the injector 13 and the interior of the cylinder 2. The damping force generated due to the flow of fuel through the holes 6 depends on the size and number of the holes 6 in the damper 10.

## Claims

1. A pintle, tracking injector (13) with an internal damper, comprising a movable closing bushing (3) embedded in a body (1), which body (1) has at least one outlet hole (9), at least one inlet hole (7) and an ambient pressure hole (8), and a pre-tensioned spring (5) embedded between the closing bushing (3) and the body (1), **characterised in that** the closing bushing (3) is sealed by spring bellows (4), to the inner side of which the ambient pressure is applied through the ambient pressure hole (8), and on the side opposite to the bellows the closing bushing (3) is provided with a piston (10) with at least one hole (6) through which the fuel flows, wherein said piston (10) moves inside a cylinder (2) and the closing bushing (3) is attached coaxially inside the body (1) and it is pressed by the spring (5), which in at least one extreme position closes the outlet hole (9) and in at least the second extreme position opens the outlet hole (9).

2. The injector according to claim 1, **characterised in that** the cylinder (2) is attached coaxially relative to the body (1) on the side opposite to the bellows (4), on the side of the closing bushing (3).

3. The injector according to claim 1 or 2, **characterised in that** at least one outlet hole (9), and preferably all outlet holes (9), are placed on the side surface of the body (1).

4. The injector according to claim 1, 2 or 3, **characterised in that** the outer side surface of the body (1) is the side surface of a cylinder or a solid figure which cross-section has the shape of an ellipse.

5. The injector according to claim 1, 2 or 3, **characterised in that** the outer side surface of the body (1) is the side surface of a prism.

6. The injector according to any of the claims from 1 to 5, **characterised in that** the cross-section of the outer side surface of the body (1) has a different shape from the cross-section of the outer surface of the movable closing bushing (3).

7. The injector according to any of the claims from 1 to 6, **characterised in that** the inlet hole (7) and the ambient pressure hole (8) are placed on the opposite side of the closing bushing (3) from the outlet hole (9).

## Patentansprüche

1. Tracking-Zapfendüse (13) mit innerem Dämpfer, umfassend eine bewegliche Verschlussbuchse (3)
die in einen Körper (1) eingebettet ist, wobei der Körper (1) mindestens ein Auslassloch (9), mindestens ein Einlassloch (7) und ein Umgebungsdruckloch (8) aufweist, und eine vorgespannte Feder (5), die zwischen der Verschlussbuchse (3) und dem Körper (1) eingebettet ist, **dadurch gekennzeichnet, dass** die Verschlussbuchse (3) durch einen Federbalg (4) abgedichtet ist, an dessen Innenseite der Umgebungsdruck durch das Umgebungsdruckloch (8) angelegt wird, und die Verschlussbuchse (3) auf der dem Balg gegenüberliegenden Seite mit einem Kolben (10) mit mindestens einem Loch (6) versehen ist, durch das der Kraftstoff strömt, wobei sich der Kolben (10) innerhalb eines Zylinders (2) bewegt und die Verschlussbuchse (3) koaxial innerhalb des Körpers (1) angebracht ist und von der Feder (5) gedrückt wird, die in mindestens einer Endstellung das Auslassloch (9) verschließt und in mindestens der zweiten Endstellung das Auslassloch (9) öffnet.

2. Düse nach Anspruch 1, **dadurch gekennzeichnet, dass** der Zylinder (2) koaxial zum Körper (1) auf der dem Balg (4) gegenüberliegenden Seite auf der Seite der Verschlussbuchse (3) angebracht ist.

3. Düse nach Anspruch 1 oder 2, **dadurch gekennzeichnet, dass** mindestens ein Auslassloch (9), vorzugsweise alle Auslasslöcher (9), an der Seitenfläche des Körpers (1) angeordnet sind.

4. Düse nach Anspruch 1, 2 oder 3, **dadurch gekennzeichnet, dass** die äußere Seitenfläche des Körpers (1) die Seitenfläche eines Zylinders oder einer festen Figur ist, deren Querschnitt die Form einer Ellipse hat.

5. Düse nach Anspruch 1, 2 oder 3, **dadurch gekennzeichnet, dass** die äußere Seitenfläche des Körpers (1) die Seitenfläche eines Prismas ist.

6. Düse nach einem der Ansprüche 1 bis 5, **dadurch gekennzeichnet, dass** der Querschnitt der äußeren Seitenfläche des Körpers (1) eine andere Form aufweist als der Querschnitt der äußeren Fläche der beweglichen Verschlussbuchse (3).

7. Düse nach einem der Ansprüche 1 bis 6, **dadurch gekennzeichnet, dass** die Einlassöffnung (7) und die Umgebungsdrucköffnung (8) auf der der Auslassöffnung (9) gegenüberliegenden Seite der Verschlussbuchse (3) angeordnet sind.

## Revendications

1. Injecteur suiveur à téton (13) avec un amortisseur intérieur, comprenant une douille de fermeture mobile (3) logée dans un corps (1), lequel corps (1) a au moins un trou de sortie (9), au moins un trou d'entrée (7) et un trou de pression ambiante (8), un ressort précontraint (5) logé entre la douille de fermeture (3) et le corps (1), **caractérisé en ce que** la douille de fermeture (3) est scellée par des soufflets à ressort (4), sur la face interne desquels la pression ambiante est appliquée à travers le trou de pression ambiante (8), et sur la face opposée aux soufflets, la douille de fermeture (3) est pourvue d'un piston (10) avec au moins un trou (6) à travers lequel le carburant s'écoule, dans lequel ledit piston (10) se déplace à l'intérieur d'un cylindre (2) et la douille de fermeture (3) est fixée coaxialement à l'intérieur du corps (1) et est pressée par le ressort (5), qui dans au moins une position extrême ferme le trou de sortie (9) et dans au moins la seconde position extrême ouvre le trou de sortie (9).

2. Injecteur selon la revendication 1, **caractérisé en ce que** le cylindre (2) est fixé coaxialement par rapport au corps (1) du côté opposé aux soufflets (4), du côté de la douille de fermeture (3).

3. Injecteur selon la revendication 1 ou 2, **caractérisé en ce qu'**au moins un trou de sortie (9), et de préférence tous les trous de sortie (9), sont situés sur la surface latérale du corps (1).

4. Injecteur selon la revendication 1, 2 ou 3, **caractérisé en ce que** la surface latérale externe du corps (1) est la surface latérale d'un cylindre ou d'une figure solide dont la section transversale a la forme d'une ellipse.

5. Injecteur selon la revendication 1, 2 ou 3, **caractérisé en ce que** la surface latérale externe du corps (1) est la surface latérale d'un prisme.

6. Injecteur selon l'une des revendications 1 à 5, **caractérisé en ce que** la section transversale de la surface latérale externe du corps (1) a une forme différente de la section transversale de la surface externe de la douille de fermeture mobile (3).

7. Injecteur selon l'une des revendications 1 à 6, **caractérisé en ce que** le trou d'entrée (7) et le trou de pression ambiante (8) sont situés sur le côté opposé de la douille de fermeture (3) par rapport au trou de sortie (9).
